# EUROPEAN PATENT APPLICATION

(11) **EP 4 287 332 A1**
(43) Date of publication of application: **06.12.2023**
(21) Application number: 22745548.2
(22) Date of filing: 06.01.2022
(51) Int. Cl.: H01M 10/052, H01G 11/38, H01G 11/60, H01M 4/13, H01M 4/62, H01M 10/0569

(54) **NON-AQUEOUS ELECTROCHEMICAL ELEMENT**

(30) Priority: 29.01.2021 JP 2021013865
(71) Applicant: Zeon Corporation, Tokyo 100-8246 (JP)
(72) Inventor: TAKAHASHI Naoki, Tokyo 100-8246 (JP)
(74) Representative: Maiwald GmbH
(86) International application number: PCT/JP2022/000281
(87) International publication number: WO 2022/163321

(57) **Abstract**

Provided is a non-aqueous electrochemical device having reduced direct current resistance at low temperature and excellent high-temperature storage characteristics. The electrochemical device includes a positive electrode, a negative electrode, a separator, and an electrolyte solution. The positive electrode includes a positive electrode mixed material layer containing a positive electrode active material, a conductive material, and a binder for a positive electrode. The binder for a positive electrode includes a polymer A that includes a nitrile group-containing monomer unit and an alkylene structural unit. The electrolyte solution contains a non-halogenated carbonate solvent and an ester solvent indicated by formula (I): R¹-C(=O)-O-R². In formula (I), R¹ and R² each represent, independently of each other, a chain alkyl group having a carbon number of 2 or more.

## Description

### TECHNICAL FIELD

The present disclosure relates to a non-aqueous electrochemical device.

### BACKGROUND

Non-aqueous electrochemical devices (hereinafter, also referred to simply as "electrochemical devices") such as lithium ion secondary batteries, lithium ion capacitors, and electric double-layer capacitors have characteristics such as compact size, light weight, high energy-density, and the ability to be repeatedly charged and discharged, and are used in a wide variety of applications. An electrochemical device typically includes a positive electrode, a negative electrode, a separator that is disposed between the positive electrode and the negative electrode and that prevents short-circuiting of the positive and negative electrodes, and an electrolyte solution. An electrode such as a positive electrode or a negative electrode typically includes a current collector and an electrode mixed material layer formed on the current collector. The electrode mixed material layer has a configuration in which an electrode active material and a conductive material are bound by a binder.

In recent years, much effort has been focused on improving binders used in electrode mixed material layer formation and electrolyte solutions with the aim of achieving even higher electrochemical device performance (for example, refer to Patent Literature (PTL) 1 to 5).

### CITATION LIST

### Patent Literature

PTL 1: JP2017-530500A
PTL 2: JP2018-535520A
PTL 3: JP2012-1190731A
PTL 4: JP-H09-97926A
PTL 5: WO2005/091422A1

### SUMMARY

### (Technical Problem)

In order to cause an electrochemical device to display adequate device characteristics even in a low temperature environment, it is desirable that direct current resistance of the electrochemical device is restricted from increasing excessively even at low temperature. On the other hand, since there are also situations in which an electrochemical device may be exposed to a high-temperature environment, it is desirable to sufficiently ensure discharge capacity even when an electrochemical device is left in a high-temperature environment for a long time (i.e., for an electrochemical device to have excellent high-temperature storage characteristics).

However, it has not been possible to obtain an electrochemical device in which excessive increase of direct current resistance at low temperature is inhibited and that can display excellent high-temperature storage characteristics with the conventional techniques described above.

Accordingly, an object of the present disclosure is to provide a non-aqueous electrochemical device having reduced direct current resistance at low temperature and excellent high-temperature storage characteristics.

### (Solution to Problem)

The inventor conducted diligent investigation with the aim of solving the problem set forth above. The inventor discovered that by, in production of an electrochemical device, using a specific polymer as a binder used in a positive electrode mixed material layer (binder for a positive electrode) and using a mixed solvent of a specific ester solvent and a non-halogenated carbonate solvent as a constituent solvent of an electrolyte solution, it is possible to reduce direct current resistance at low temperature and improve high-temperature storage characteristics of the obtained electrochemical device. In this manner, the inventor completed the present disclosure.

Specifically, the present disclosure aims to advantageously solve the problem set forth above, and a presently disclosed non-aqueous electrochemical device comprises a positive electrode, a negative electrode, a separator, and an electrolyte solution, wherein the positive electrode includes a positive electrode mixed material layer containing a positive electrode active material, a conductive material, and a binder for a positive electrode, the binder for a positive electrode includes a polymer A that includes a nitrile group-containing monomer unit and an alkylene structural unit, and the electrolyte solution contains a non-halogenated carbonate solvent and an ester solvent indicated by formula (I), shown below,

R¹-C(=O)-O-R² ... (I)

where, in formula (I), R¹ and R² each represent, independently of each other, a chain alkyl group having a carbon number of 2 or more. An electrochemical device that includes the polymer A set forth above as a binder for a positive electrode and includes at least the two solvents set forth above as a solvent of an electrolyte solution in this manner has low direct current resistance at low temperature and excellent high-temperature storage characteristics.

Note that the phrase "includes a monomer unit" as used in the present disclosure means that "a repeating unit derived from that monomer is included in a polymer obtained using the monomer".

Also note that the phrase "includes an alkylene structural unit" as used in the present disclosure means that "a repeating unit composed of only an alkylene structure represented by a general formula -CₙH₂ₙ- (n is an integer of 2 or more) is included in a polymer". In the preceding general formula -CₙH₂ₙ-, n is preferably 4.

In the presently disclosed non-aqueous electrochemical device, a mass ratio of the ester solvent relative to the non-halogenated carbonate solvent is preferably not less than 0.5 and not more than 3. When a mass ratio of the non-halogenated carbonate solvent and the ester solvent indicated by formula (I) (ester solvent (I)) in the electrolyte solution (ester solvent (I)/non-halogenated carbonate solvent) is within the range set forth above, direct current resistance at low temperature of the electrochemical device can be even further reduced, and high-temperature storage characteristics of the electrochemical device can be improved. It is also possible to enhance output characteristics at around normal temperature (25°C) (i.e., normal-temperature output characteristics) of the electrochemical device.

In the presently disclosed non-aqueous electrochemical device, a proportion constituted by the non-halogenated carbonate solvent in the electrolyte solution is preferably 15 mass% or more when total mass of the electrolyte solution is taken to be 100 mass%. When the proportion constituted by the non-halogenated carbonate solvent in the electrolyte solution is not less than the value set forth above, high-temperature storage characteristics of the electrochemical device can be further improved.

In the presently disclosed non-aqueous electrochemical device, the conductive material preferably includes a fibrous carbon material. When a fibrous carbon material is used as the conductive material, normal-temperature output characteristics of the electrochemical device can be improved.

Note that the "fibrous carbon material" referred to in the present disclosure is taken to have an aspect ratio (major axis/minor axis) of 5 or more. Moreover, the aspect ratio of the fibrous carbon material is preferably more than 10. The "aspect ratio" can be determined by observing the fibrous carbon material using a scanning electron microscope (SEM), measuring the largest axis (major axis) and the fiber diameter (minor axis) in a direction orthogonally intersecting the largest axis for arbitrary fibers among the fibrous carbon material, and calculating a ratio of the major axis and the minor axis (major axis/minor axis).

Moreover, in the presently disclosed non-aqueous electrochemical device, the fibrous carbon material preferably has a specific surface area of 150 m²/g or more. When the specific surface area of the fibrous carbon material is not less than the value set forth above, direct current resistance at low temperature of the electrochemical device can be even further reduced while also improving normal-temperature output characteristics of the electrochemical device.

Note that the "specific surface area" of the fibrous carbon material referred to in the present disclosure is the BET specific surface area according to a nitrogen adsorption method and can be measured in accordance with ASTM D3037-81.

In the presently disclosed non-aqueous electrochemical device, it is preferable that proportional content of the nitrile group-containing monomer unit in the polymer A is not less than 20 mass% and not more than 50 mass% when all repeating units in the polymer A are taken to be 100 mass% and that proportional content of the alkylene structural unit in the polymer A is not less than 40 mass% and not more than 80 mass% when all repeating units in the polymer A are taken to be 100 mass%. When the proportional contents of the nitrile group-containing monomer unit and the alkylene structural unit in the polymer A are within the ranges set forth above, direct current resistance at low temperature of the electrochemical device can be even further reduced while also improving normal-temperature output characteristics of the electrochemical device.

Note that the proportional contents of monomer units and structural units (inclusive of subsequently described "hydrogenated units") in a polymer can be measured by a nuclear magnetic resonance (NMR) method such as ¹H-NMR or ¹³C-NMR.

In the presently disclosed non-aqueous electrochemical device, the polymer A preferably has a weight-average molecular weight of not less than 5,000 g/mol and not more than 500,000 g/mol. When the weight-average molecular weight of the polymer A is within the range set forth above, direct current resistance at low temperature of the electrochemical device can be even further reduced while also improving normal-temperature output characteristics of the electrochemical device.

Note that the "weight-average molecular weight" of a polymer referred to in the present disclosure can be measured by a method described in the EXAMPLES section.

In the presently disclosed non-aqueous electrochemical device, proportional content of a 1,2-bonded hydrogenated butadiene unit in the polymer A is preferably 20 mass% or less when all repeating units in the polymer A are taken to be 100 mass%. When the proportional content of a 1,2-bonded hydrogenated butadiene unit in the polymer A is not more than the value set forth above, direct current resistance at low temperature of the electrochemical device can be even further reduced while also improving normal-temperature output characteristics of the electrochemical device.

Note that the " 1,2-bonded hydrogenated butadiene unit" referred to in the present disclosure is one type of the aforementioned alkylene structural unit and is a structural unit (-CH₂-CH(C₂H₅)-) that is obtained through hydrogenation of a 1,3-butadiene unit formed through 1,2-bonding of 1,3-butadiene.

In the presently disclosed non-aqueous electrochemical device, the binder for a positive electrode preferably further includes a fluorine-containing resin. When the aforementioned fluorine-containing resin is used in addition to the polymer A as the binder for a positive electrode, direct current resistance at low temperature of the electrochemical device can be even further reduced while also further improving high-temperature storage characteristics of the electrochemical device. It is also possible to enhance normal-temperature output characteristics of the electrochemical device.

### (Advantageous Effect)

The presently disclosed non-aqueous electrochemical device has reduced direct current resistance at low temperature and excellent high-temperature storage characteristics.

### DETAILED DESCRIPTION

The following provides a detailed description of embodiments of the present disclosure.

The presently disclosed electrochemical device includes at least a positive electrode, a negative electrode, a separator, and an electrolyte solution. A positive electrode mixed material layer that is a constituent of the positive electrode in the presently disclosed electrochemical device contains a polymer A including a nitrile group-containing monomer unit and an alkylene structural unit as a binder for a positive electrode. Moreover, the electrolyte solution in the presently disclosed electrochemical device contains an ester solvent (I) and a non-halogenated carbonate solvent.

The presently disclosed electrochemical device does not experience an excessive increase of direct current resistance even at low temperature and has excellent high-temperature storage characteristics as a result of the aforementioned positive electrode and the aforementioned electrolyte solution being used in combination.

### (Positive electrode)

The positive electrode that is included in the presently disclosed electrochemical device includes at least a positive electrode mixed material layer and a current collector. Note that the positive electrode may include a positive electrode mixed material layer at just one side of the current collector or may include positive electrode mixed material layers at both sides of the current collector. Moreover, so long as at least one positive electrode mixed material layer of the positive electrode is a specific positive electrode mixed material layer described below, the expected effects of the presently disclosed electrochemical device can be sufficiently displayed.

Furthermore, the positive electrode may include known constituents (for example, a heat-resistant layer or an adhesive layer) other than the positive electrode mixed material layer and the current collector.

### <Positive electrode mixed material layer>

The positive electrode mixed material layer contains a positive electrode active material, a conductive material, and a binder for a positive electrode, and optionally contains other components.

### <<Positive electrode active material>>

The positive electrode active material that is contained in the positive electrode mixed material layer can be a known positive electrode active material without any specific limitations.

A positive electrode active material that is used in a lithium ion secondary battery, for example, may be a metal oxide that contains lithium (Li) without any specific limitations. The positive electrode active material is preferably a positive electrode active material that contains one or more selected from the group consisting of cobalt (Co), nickel (Ni), manganese (Mn), and iron (Fe) in addition to lithium (Li). Examples of such positive electrode active materials include lithium-containing cobalt oxide (LiCoO₂), lithium manganate (LiMn₂O₄), lithium-containing nickel oxide (LiNiO₂), a lithium-containing complex oxide of Co-Ni-Mn (LiNi_{0.8}Co_{0.1}Mn_{0.1}O₂, etc.), a lithium-containing complex oxide of Ni-Mn-Al, a lithium-containing complex oxide of Ni-Co-Al, olivine-type lithium manganese phosphate (LiMnPO₄), olivine-type lithium iron phosphate (LiFePO₄), a lithium-rich spinel compound represented by Li₁₊ₓMn₂₋ₓO₄ (0 < x < 2), and LiNi_{0.5}Mn_{1.5}O₄. One positive electrode active material may be used individually, or two or more positive electrode active materials may be used in combination in a freely selected ratio.

The particle diameter of the positive electrode active material is not specifically limited and may be the same as that of a conventionally used positive electrode active material. The proportion in which the positive electrode active material is contained in the positive electrode mixed material layer when the overall positive electrode mixed material layer is taken to be 100 mass% is preferably 90 mass% or more, more preferably 93 mass% or more, and even more preferably 96 mass% or more, and is preferably 99 mass% or less.

### <<Conductive material>>

The conductive material is not specifically limited so long as it is a material that functions as a conductive material that can ensure electrical contact among the positive electrode active material in the positive electrode mixed material layer, but it is preferable to use a carbon material.

The carbon material may be carbon black (for example, acetylene black, Ketjenblack^{®} (Ketjenblack is a registered trademark in Japan, other countries, or both), or furnace black); graphite; carbon flake; or a fibrous carbon material such as carbon nanofiber, carbon nanotubes (CNTs), or vapor-grown carbon fiber. One of these carbon materials may be used individually, or two or more of these carbon materials may be used in combination in a freely selected ratio. Of these carbon materials, a fibrous carbon material is preferable from a viewpoint that it is possible to maintain a good electrical conduction network in the positive electrode mixed material layer and cause the electrochemical device to display excellent normal-temperature output characteristics even in a situation in which the binder for a positive electrode swells in the electrolyte solution, and CNTs are more preferable. Note that the CNTs may be single-walled carbon nanotubes or multi-walled carbon nanotubes, or may be a mixture thereof.

The specific surface area of the fibrous carbon material is preferably 150 m²/g or more, more preferably 180 m²/g or more, and even more preferably 200 m²/g or more. When the specific surface area of the fibrous carbon material is 150 m²/g or more, it is possible to form a sufficiently good electrical conduction network in the positive electrode mixed material layer and to even further reduce direct current resistance at low temperature of the electrochemical device while also further improving normal-temperature output characteristics of the electrochemical device.

Note that the upper limit for the specific surface area of the fibrous carbon material is not specifically limited and may be 1,500 m²/g or less, for example.

Although no specific limitations are placed on the content of the conductive material in the positive electrode mixed material layer, the content of the conductive material per 100 parts by mass of the positive electrode active material is preferably 0.3 parts by mass or more, and more preferably 0.7 parts by mass or more, and is preferably 5.0 parts by mass or less, and more preferably 4.0 parts by mass or less. When the content of the conductive material in the positive electrode mixed material layer is within any of the ranges set forth above, direct current resistance at low temperature of the electrochemical device can be even further reduced while also further improving high-temperature storage characteristics of the electrochemical device, and normal-temperature output characteristics can also be enhanced.

### <<Binder for positive electrode>>

No specific limitations are placed on the binder for a positive electrode so long as the polymer A is used, and a binder other than the polymer A (i.e., another binder for a positive electrode) can optionally be used in addition to the polymer A.

### [Polymer A]

The polymer A includes at least a nitrile group-containing monomer unit and an alkylene structural unit, and optionally includes other repeating units.

### -Nitrile group-containing monomer unit-

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. One nitrile group-containing monomer may be used individually, or two or more nitrile group-containing monomers may be used in combination in a freely selected ratio. Of these nitrile group-containing monomers, acrylonitrile is preferable.

The proportional content of nitrile group-containing monomer units in the polymer A when all repeating units in the polymer A are taken to be 100 mass% is preferably 20 mass% or more, more preferably 25 mass% or more, even more preferably 30 mass% or more, and particularly preferably 35 mass% or more, and is preferably 50 mass% or less, more preferably 45 mass% or less, and even more preferably 40 mass% or less. When the proportional content of nitrile group-containing monomer units in the polymer A is 20 mass% or more, this ensures sufficient solubility in a dispersion medium (for example, N-methyl-2-pyrrolidone) of a conductive material dispersion liquid and a slurry composition used in formation of the positive electrode mixed material layer. On the other hand, when the proportional content of nitrile group-containing monomer units in the polymer A is 50 mass% or less, excessive runoff of the polymer A into the electrolyte solution can be inhibited. In other words, when the proportional content of nitrile group-containing monomer units in the polymer A is within any of the ranges set forth above, it is possible to inhibit freezing and excessive thickening of the electrolyte solution and to even further reduce direct current resistance at low temperature of the electrochemical device while also enhancing normal-temperature output characteristics of the electrochemical device.

### -Alkylene structural unit-

The alkylene structural unit may be linear or branched, but is preferably linear (i.e., is preferably a linear alkylene structural unit) from a viewpoint of even further reducing direct current resistance at low temperature of the electrochemical device while also further improving high-temperature storage characteristics and enhancing normal-temperature output characteristics of the electrochemical device.

Examples of methods by which the alkylene structural unit may be introduced into the polymer A include the following methods (1) and (2), but are not specifically limited thereto.
(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer

Of these methods, method (1) is preferable in terms of ease of production of the polymer A.

The conjugated diene monomer may be a conjugated diene compound having a carbon number of 4 or more such as 1,3-butadiene, isoprene, 2,3-dimethyl-1,3-butadiene, or 1,3-pentadiene, for example. Of these conjugated diene compounds, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit).

The 1-olefin monomer may be ethylene, propylene, 1-butene, or the like, for example.

One of these conjugated diene monomers or 1-olefin monomers may be used individually, or two or more of these conjugated diene monomers or 1-olefin monomers may be used in combination in a freely selected ratio.

The following two types of units may be present among hydrogenated 1,3-butadiene units depending on the bonding format during formation of prehydrogenation 1,3-butadiene units.
(i) A structural unit obtained through hydrogenation of a 1,3-butadiene unit formed through 1,4-bonding of 1,3-butadiene (-CH₂-CH₂-CH₂-CH₂-; hereinafter, referred to as a "1,4-bonded hydrogenated butadiene unit")
(ii) A structural unit obtained through hydrogenation of a 1,3-butadiene unit formed through 1,2-bonding of 1,3-butadiene (-CH₂-CH(C₂H₅)-; previously mentioned "1,2-bonded hydrogenated butadiene unit")

The proportional content of 1,2-bonded hydrogenated butadiene units in the polymer A when all repeating units in the polymer A are taken to be 100 mass% is preferably 20 mass% or less, preferably 15 mass% or less, more preferably 10 mass% or less, and even more preferably 5.9 mass% or less. When the proportional content of 1,2-bonded hydrogenated butadiene units in the polymer A is 20 mass% or less, direct current resistance at low temperature of the electrochemical device can be even further reduced while also enhancing normal-temperature output characteristics of the electrochemical device, which is presumed to be due to excessive swelling of the polymer A in the electrolyte solution being inhibited through reduction of the number of side chain ethyl groups (-C₂H₅) in the polymer A.

Note that no specific limitations are placed on the lower limit for the proportion constituted by 1,2-bonded hydrogenated butadiene units in the polymer A, and this proportion is 0 mass% or more, and can be set as 2 mass% or more, for example.

The proportional content of 1,2-bonded hydrogenated butadiene units in the polymer A when all hydrogenated 1,3-butadiene units (i.e., the total of 1,4-bonded hydrogenated butadiene units and 1,2-bonded hydrogenated butadiene units) in the polymer A are taken to be 100 mass% is preferably 30 mass% or less, more preferably 20 mass% or less, even more preferably 15 mass% or less, and particularly preferably 9.1 mass% or less. When the proportion constituted by 1,2-bonded hydrogenated butadiene units among all hydrogenated 1,3-butadiene units is 30 mass% or less, direct current resistance at low temperature of the electrochemical device can be even further reduced while also enhancing normal-temperature output characteristics of the electrochemical device, which is presumed to be due to excessive swelling of the polymer A in the electrolyte solution being inhibited through reduction of the number of side chain ethyl groups (-C₂H₅) in the polymer A.

Note that no specific limitations are placed on the lower limit for the proportion constituted by 1,2-bonded hydrogenated butadiene units among all hydrogenated 1,3-butadiene units, and this proportion is 0 mass% or more, and can be set as 4 mass% or more, for example.

The proportion constituted by 1,2-bonded hydrogenated butadiene units in the polymer A and the proportion constituted by 1,2-bonded hydrogenated butadiene units among all hydrogenated 1,3-butadiene units that are described above can be adjusted by altering the production method of the polymer A (for example, the polymerization temperature and the timing at which polymerization is stopped).

Specifically, a polymerization temperature of not lower than 3°C and not higher than 70°C is preferable, and a polymerization temperature of not lower than 5°C and not higher than 60°C is more preferable for reducing the proportion constituted by 1,2-bonded hydrogenated butadiene units. Moreover, in the polymerization reaction, adding a polymerization inhibitor to stop polymerization at a point at which the polymerization conversion rate of monomers is not less than 50 mass% and not more than 95 mass% is preferable, and adding a polymerization inhibitor to stop polymerization at a point at which the polymerization conversion rate of monomers is not less than 60 mass% and not more than 85 mass% is more preferable for reducing the proportion constituted by 1,2-bonded hydrogenated butadiene units.

The proportional content of alkylene structural units in the polymer A when all repeating units in the polymer A are taken to be 100 mass% is preferably 40 mass% or more, more preferably 50 mass% or more, and even more preferably 60 mass% or more, and is preferably 80 mass% or less, and more preferably 70 mass% or less. When the proportional content of alkylene structural units in the polymer A is 40 mass% or more, excessive runoff of the polymer A into the electrolyte solution can be inhibited. On the other hand, when the proportional content of alkylene structural units in the polymer A is 80 mass% or less, this ensures sufficient solubility in a dispersion medium (for example, N-methyl-2-pyrrolidone) of a conductive material dispersion liquid and a slurry composition used in formation of the positive electrode mixed material layer. In other words, when the proportional content of alkylene structural units in the polymer A is within any of the ranges set forth above, it is possible to inhibit freezing and excessive thickening of the electrolyte solution and to even further reduce direct current resistance at low temperature of the electrochemical device while also enhancing normal-temperature output characteristics of the electrochemical device.

Note that in a case in which the polymer A is a hydrogenated polymer that is obtained through hydrogenation of a polymer obtained by polymerizing a monomer composition containing a conjugated diene monomer as previously described, the hydrogenated polymer may include a non-hydrogenated conjugated diene monomer unit in addition to an alkylene structural unit. In this case, the total proportional content of alkylene structural units and non-hydrogenated conjugated diene monomer units (hereinafter, referred to as the "proportional content of conjugated diene monomer-derived repeating units") in the polymer A when all repeating units in the polymer A are taken to be 100 mass% is preferably 40 mass% or more, more preferably 50 mass% or more, and even more preferably 60 mass% or more, and is preferably 80 mass% or less, and more preferably 70 mass% or less. When the proportional content of conjugated diene monomer-derived repeating units in the polymer A is 40 mass% or more, excessive runoff of the polymer A into the electrolyte solution can be inhibited. On the other hand, when the proportional content of conjugated diene monomer-derived repeating units in the polymer A is 80 mass% or less, this ensures sufficient solubility in a dispersion medium (for example, N-methyl-2-pyrrolidone) of a conductive material dispersion liquid and a slurry composition used in formation of the positive electrode mixed material layer. In other words, when the proportional content of conjugated diene monomer-derived repeating units in the polymer A is within any of the ranges set forth above, it is possible to inhibit freezing and excessive thickening of the electrolyte solution and to even further reduce direct current resistance at low temperature of the electrochemical device while also enhancing normal-temperature output characteristics of the electrochemical device.

### -Other repeating units-

Examples of other repeating units that can be included in the polymer A include, but are not specifically limited to, an aromatic vinyl monomer unit, an acidic group-containing monomer unit, and a (meth)acrylic acid ester monomer unit. The polymer A may include one type of other repeating unit or may include two or more types of other repeating units.

Note that in the present disclosure, "(meth)acryl" is used to indicate "acryl" and/or "methacryl".

Examples of aromatic vinyl monomers that can form an aromatic vinyl monomer unit include styrene, α-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination in a freely selected ratio. Of these aromatic vinyl monomers, styrene is preferable.

In a case in which the polymer A includes an aromatic vinyl monomer unit, the proportional content of aromatic vinyl monomer units in the polymer A is, from a viewpoint of even further reducing direct current resistance at low temperature of the electrochemical device while also further improving high-temperature storage characteristics and enhancing normal-temperature output characteristics of the electrochemical device, preferably 10 mass% or more, and more preferably 20 mass% or more when all repeating units in the polymer A are taken to be 100 mass%, and is preferably 40 mass% or less, more preferably 35 mass% or less, and even more preferably 31 mass% or less when all repeating units in the polymer A are taken to be 100 mass%.

Examples of acidic group-containing monomers that can form an acidic group-containing monomer unit include carboxy group-containing monomers, sulfo group-containing monomers, and phosphate group-containing monomers. One acidic group-containing monomer may be used individually, or two or more acidic group-containing monomers may be used in combination in a freely selected ratio.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-transaryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxy group through hydrolysis can also be used as a carboxy group-containing monomer. Of these examples, acrylic acid and methacrylic acid are preferable as carboxy group-containing monomers.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

In a case in which the polymer A includes an acidic group-containing monomer unit, the proportional content of acidic group-containing monomer units in the polymer A is, from a viewpoint of even further reducing direct current resistance at low temperature of the electrochemical device while also further improving high-temperature storage characteristics and enhancing normal-temperature output characteristics of the electrochemical device, preferably 1 mass% or more, and more preferably 3 mass% or more when all repeating units in the polymer A are taken to be 100 mass%, and is preferably 10 mass% or less, and more preferably 7 mass% or less when all repeating units in the polymer A are taken to be 100 mass%.

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One (meth)acrylic acid ester monomer may be used individually, or two or more (meth)acrylic acid ester monomers may be used in combination in a freely selected ratio.

In a case in which the polymer A includes a (meth)acrylic acid ester monomer unit, the proportional content of (meth)acrylic acid ester monomer units in the polymer A is, from a viewpoint of even further reducing direct current resistance at low temperature of the electrochemical device while also further improving high-temperature storage characteristics and enhancing normal-temperature output characteristics of the electrochemical device, preferably 0.1 mass% or more, and more preferably 1 mass% or more when all repeating units in the polymer A are taken to be 100 mass%, and is preferably 10 mass% or less, and more preferably 5 mass% or less when all repeating units in the polymer A are taken to be 100 mass%.

### -Production method-

No specific limitations are placed on the method by which the polymer A is produced. For example, the polymer A may be produced by performing polymerization in an aqueous solvent with respect to a monomer composition that contains one monomer or two or more monomers and then optionally performing hydrogenation. Note that the proportional content of each monomer in the monomer composition can be set in accordance with the desired proportional content of each repeating unit (monomer unit and/or structural unit) in the polymer.

The polymerization method is not specifically limited and may be solution polymerization, suspension polymerization, bulk polymerization, emulsion polymerization, or the like. Moreover, ionic polymerization, radical polymerization, living radical polymerization, various types of condensation polymerization, addition polymerization, or the like can be adopted as the polymerization reaction. A known emulsifier and/or polymerization initiator can be used in the polymerization as necessary. Moreover, the hydrogenation can be performed by a known method.

Note that in a case in which 1,3-butadiene is used as a monomer to produce a polymer A that is a hydrogenated polymer through hydrogenation, the proportion constituted by 1,2-bonded hydrogenated butadiene units can be controlled by a method previously described in the "Alkylene structural unit" section.

### -Weight-average molecular weight-

The weight-average molecular weight of the polymer A is preferably 5,000 g/mol or more, and is preferably 500,000 g/mol or less, more preferably 400,000 g/mol or less, even more preferably 300,000 g/mol or less, and particularly preferably 170,000 g/mol or less. When the weight-average molecular weight of the polymer A is within any of the ranges set forth above, a positive electrode mixed material layer having the conductive material present throughout without excessive aggregation is obtained, the polymer A does not swell excessively in the electrolyte solution, and freezing and thickening of the electrolyte solution can be inhibited. Consequently, direct current resistance at low temperature of the electrochemical device can be even further reduced while also enhancing normal-temperature output characteristics of the electrochemical device.

### -Content-

Although no specific limitations are placed on the content of the polymer A in the positive electrode mixed material layer, the content of the polymer A per 100 parts by mass of the positive electrode active material is preferably 0.1 parts by mass or more, and more preferably 0.3 parts by mass or more, and is preferably 2.0 parts by mass or less, and more preferably 1.0 parts by mass or less. When the content of the polymer A in the positive electrode mixed material layer is within any of the ranges set forth above, direct current resistance at low temperature of the electrochemical device can be even further reduced while also further improving high-temperature storage characteristics of the electrochemical device, and normal-temperature output characteristics can also be enhanced.

### [Other binder for positive electrode]

A known binder that is used in a positive electrode of an electrochemical device can be used as another binder for a positive electrode. The other binder for a positive electrode may be a fluorine-containing resin, polyacrylonitrile, polyvinyl alcohol, or polyvinylpyrrolidone (PVP), for example. One of these other binders may be used individually, or two or more of these other binders may be used in combination. Of these other binders, a fluorine-containing resin is preferable from a viewpoint of even further reducing direct current resistance at low temperature of the electrochemical device while also further improving high-temperature storage characteristics and enhancing normal-temperature output characteristics of the electrochemical device, and polyvinylidene fluoride (PVdF) is more preferable.

Although no specific limitations are placed on the content of the other binder for a positive electrode in the positive electrode mixed material layer, the content of the other binder for a positive electrode per 100 parts by mass of the positive electrode active material is preferably 0.3 parts by mass or more, and more preferably 0.7 parts by mass or more, and is preferably 3.0 parts by mass or less, and more preferably 2.0 parts by mass or less. When the content of the other binder for a positive electrode in the positive electrode mixed material layer is within any of the ranges set forth above, direct current resistance at low temperature of the electrochemical device can be even further reduced while also further improving high-temperature storage characteristics of the electrochemical device, and normal-temperature output characteristics can also be enhanced.

### <<Other components>>

Examples of other components that can be contained in the positive electrode mixed material layer include viscosity modifiers, reinforcing materials, antioxidants, and additives for electrolyte solution having a function of inhibiting electrolyte solution decomposition. One of these other components may be used individually, or two or more of these other components may be used in combination in a freely selected ratio.

### <Current collector>

The current collector is formed of a material having electrical conductivity and electrochemical durability. For example, the current collector may be formed of iron, copper, aluminum, nickel, stainless steel, titanium, tantalum, gold, platinum, or the like. One of these materials may be used individually, or two or more of these materials may be used in combination. The current collector of the positive electrode is preferably a current collector that is formed of aluminum (aluminum foil, etc.).

### <Production method of positive electrode>

The method by which the positive electrode including the current collector and the positive electrode mixed material layer described above is produced is not specifically limited and may, for example, include a step of producing a slurry composition for a positive electrode containing the above-described positive electrode active material, conductive material, binder, and other components that are used as necessary in a dispersion medium (slurry production step), a step of applying the slurry composition for a positive electrode onto at least one side of the current collector (application step), and a step of drying the slurry composition for a positive electrode that has been applied onto at least one side of the current collector to form an electrode mixed material layer on the current collector (drying step).

### «Slurry production step»

In the slurry production step, a slurry composition for a positive electrode is produced by mixing a positive electrode active material, a conductive material, a binder for a positive electrode, a dispersion medium, and other components that are used as necessary.

Water or an organic solvent can be used as the dispersion medium. Examples of organic solvents that may be used include, but are not specifically limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide organic solvents such as N,N-dimethylformamide and N-methyl-2-pyrrolidone (NMP); and aromatic hydrocarbons such as toluene, xylene, chlorobenzene, orthodichlorobenzene, and paradichlorobenzene. Note that one type of dispersion medium may be used individually, or two or more types of dispersion mediums may be used in combination in a freely selected ratio. NMP is preferable as the dispersion medium.

Mixing of the above-described components can be performed using a known mixing device such as a planetary mixer without any specific limitations.

Note that a method in which the conductive material, the polymer A serving as the binder for a positive electrode, and the dispersion medium are premixed to produce a conductive material dispersion liquid and then the positive electrode active material and the like are added to the obtained conductive material dispersion liquid may be adopted in production of the slurry composition for a positive electrode.

### «Application step»

The method by which the slurry composition for a positive electrode is applied onto the current collector is not specifically limited and may be a commonly known method. Specific examples of application methods that can be used include doctor blading, dip coating, reverse roll coating, direct roll coating, gravure coating, extrusion coating, and brush coating. During application, the slurry composition for a positive electrode may be applied onto one side or both sides of the current collector. The thickness of the slurry coating on the current collector after application but before drying may be set as appropriate in accordance with the thickness of the positive electrode mixed material layer to be obtained after drying.

### <<Drying step>>

The slurry composition for a positive electrode on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition for a positive electrode on the current collector in this manner, a positive electrode mixed material layer can be formed on the current collector to thereby obtain a positive electrode including the current collector and the positive electrode mixed material layer.

After the drying step, the positive electrode mixed material layer may be further subjected to a pressing process such as mold pressing or roll pressing. The pressing process can cause the positive electrode mixed material layer to closely adhere well to the current collector.

Moreover, in a case in which the positive electrode mixed material layer contains a curable polymer, this polymer may be cured after formation of the positive electrode mixed material layer.

### <Negative electrode and separator>

Any known negative electrode that is used as a negative electrode of an electrochemical device can be used as the negative electrode without any specific limitations. For example, a negative electrode that includes a negative electrode mixed material layer on a current collector can be used. The negative electrode mixed material layer can be formed using a known negative electrode active material, binder for a negative electrode, and so forth.

The separator can be any of those described in JP2012-204303A, for example, without any specific limitations. Of these separators, a microporous membrane formed of polyolefinic (polyethylene, polypropylene, polybutene, or polyvinyl chloride) resin is preferable because such a membrane can reduce the total thickness of the separator, which can increase the ratio of electrode active material in the electrochemical device, and thereby increase the volumetric capacity of the electrochemical device.

### (Electrolyte solution)

The electrolyte solution that is included in the presently disclosed electrochemical device contains at least the previously described ester solvent (I) and non-halogenated carbonate solvent. Note that the electrolyte solution normally contains a supporting electrolyte and may further contain any components that can be contained in an electrolyte solution of an electrochemical device, such as non-aqueous solvents other than the ester solvent (I) and the non-halogenated carbonate solvent (i.e., other solvents) and additives.

### <Ester solvent (I)>

The ester solvent (I) has a structure represented by the following formula (I) as previously described.

R¹-C(=O)-O-R² ... (I)

In formula (I), R¹ and R² each represent, independently of each other, a chain alkyl group having a carbon number of 2 or more. Note that R¹ and R² are independent of each other and may have the same structure or different structures.

By using an electrolyte solution that contains the ester solvent (I), it is possible to cause an appropriate degree of swelling of the polymer A in the electrolyte solution and to reduce direct current resistance at low temperature of the electrochemical device.

The chain alkyl groups constituting R¹ and R² are required to each have a carbon number of 2 or more as previously described, and preferably have a carbon number of 5 or less, and more preferably 4 or less. When the carbon number of the chain alkyl group is less than 2 (i.e., when the chain alkyl group is a methyl group having a carbon number of 1), the polymer A swells excessively in the electrolyte solution, and freezing and excessive thickening of the electrolyte solution cannot be inhibited. This results in increased direct current resistance at low temperature of the electrochemical device. On the other hand, when the carbon number of the chain alkyl group is 5 or less, the polymer A can be caused to swell to an appropriate degree in the electrolyte solution, and direct current resistance at low temperature of the electrochemical device can be even further reduced while also further improving high-temperature storage characteristics of the electrochemical device.

The chain alkyl group having a carbon number of 2 or more may be a linear alkyl group having a carbon number of 2 or more such as an ethyl group, an n-propyl group, an n-butyl group, an n-pentyl group, or an n-hexyl group; or a branched alkyl group having a carbon number of 3 or more such as an isopropyl group, an isobutyl group, a sec-butyl group, a tert-butyl group, an isopentyl group, a sec-pentyl group, a 3-pentyl group, or a tert-pentyl group. Of these examples, linear alkyl groups having a carbon number of 2 or more are preferable as the chain alkyl groups having a carbon number of 2 or more that constitute R¹ and R² from a viewpoint of even further reducing direct current resistance at low temperature of the electrochemical device while also further improving high-temperature storage characteristics of the electrochemical device, and an ethyl group is more preferable.

Specific examples of the ester solvent (I) that are suitable include ethyl propanoate (R¹: ethyl group; R²: ethyl group), ethyl pentanoate (R¹: n-butyl group; R²: ethyl group), ethyl hexanoate (R¹: n-pentyl group; R²: ethyl group), butyl propanoate (R¹: ethyl group; R²: n-butyl group), and hexyl propanoate (R¹: ethyl group; R²: n-hexyl group). Of these examples, ethyl propanoate, ethyl pentanoate, and butyl propanoate are preferable from a viewpoint of even further reducing direct current resistance at low temperature of the electrochemical device while also further improving high-temperature storage characteristics of the electrochemical device, and ethyl propanoate is more preferable.

One ester solvent (I) may be used individually, or two or more ester solvents (I) may be used in combination in a freely selected ratio.

The proportion constituted by the ester solvent (I) in the electrolyte solution when the total mass of the electrolyte solution is taken to be 100 mass% is preferably 20 mass% or more, more preferably 25 mass% or more, and even more preferably 30 mass% or more, and is preferably 85 mass% or less, more preferably 75 mass% or less, and even more preferably 70 mass% or less. When the proportion constituted by the ester solvent (I) in the electrolyte solution is 20 mass% or more, the freezing point of the electrolyte solution does not become excessively high, and freezing and excessive thickening of the electrolyte solution can be inhibited. Consequently, direct current resistance at low temperature of the electrochemical device can be even further reduced. On the other hand, when the proportion constituted by the ester solvent (I) in the electrolyte solution is 85 mass% or less, high-temperature storage characteristics of the electrochemical device can be sufficiently ensured.

Note that the proportion (mass%) constituted by an ester solvent (I) and/or a subsequently described non-halogenated carbonate solvent in an electrolyte solution can be measured by gas chromatography.

### <Non-halogenated carbonate solvent>

The non-halogenated carbonate solvent is a carbonate solvent that is not halogenated (i.e., that does not include a halogen atom).

By using an electrolyte solution that contains a non-halogenated carbonate solvent, it is possible to form an SEI (Solid Electrolyte Interphase) film at the surface of an electrode active material and to improve high-temperature storage characteristics of the electrochemical device.

The non-halogenated carbonate solvent may be ethylene carbonate (EC), propylene carbonate (PC), diethyl carbonate (DEC), methyl ethyl carbonate (MEC), or butylene carbonate (BC), for example. Of these non-halogenated carbonate solvents, ethylene carbonate and propylene carbonate are preferable from a viewpoint of further improving high-temperature storage characteristics of the electrochemical device.

One non-halogenated carbonate solvent may be used individually, or two or more non-halogenated carbonate solvents may be used in combination in a freely selected ratio.

The proportion constituted by the non-halogenated carbonate solvent in the electrolyte solution when the total mass of the electrolyte solution is taken to be 100 mass% is preferably 15 mass% or more, more preferably 25 mass% or more, and even more preferably 30 mass% or more, and is preferably 80 mass% or less, more preferably 75 mass% or less, and even more preferably 70 mass% or less. When the proportion constituted by the non-halogenated carbonate solvent in the electrolyte solution is 15 mass% or more, there is good SEI film formation at the surface of an electrode active material, and high-temperature storage characteristics of the electrochemical device can be further improved. On the other hand, when the proportion constituted by the non-halogenated carbonate solvent in the electrolyte solution is 80 mass% or less, direct current resistance at low temperature of the electrochemical device can be sufficiently reduced.

### <Ester solvent (I)/Non-halogenated carbonate solvent>

Although no specific limitations are placed on the mixing ratio of the above-described ester solvent (I) and non-halogenated carbonate solvent in the electrolyte solution, a mass ratio of the ester solvent (I) relative to the non-halogenated carbonate solvent is preferably 0.5 or more, and is preferably 3 or less, more preferably 2 or less, and even more preferably 1.8 or less. When "ester solvent (I)/non-halogenated carbonate solvent" is 0.5 or more, direct current resistance at low temperature of the electrochemical device can be further reduced. On the other hand, when "ester solvent (I)/non-halogenated carbonate solvent" is 3 or less, high-temperature storage characteristics can be even further improved. Moreover, ion conductivity is ensured due to the electrolyte solution having sufficiently high permittivity, and direct current resistance at low temperature of the electrochemical device can be further reduced while also enhancing normal-temperature output characteristics of the electrochemical device.

### <Other solvents>

Any non-aqueous solvent that can be used in an electrolyte solution of an electrochemical device and that does not correspond to the above-described ester solvent (I) and non-halogenated carbonate solvent can be used without any specific limitations as another solvent. Examples of other solvents include halogenated carbonate solvents (for example, fluorinated cyclic carbonates described in JP2017-530500A), ethyl acetate, γ-butyrolactone, methyl formate, 1,2-dimethoxyethane, tetrahydrofuran, sulfolane, and dimethyl sulfoxide. One other solvent may be used individually, or two or more other solvents may be used in combination in a freely selected ratio.

However, the proportion constituted by other solvents in the electrolyte solution is preferably small from a viewpoint of causing the polymer A to swell to an appropriate degree in the electrolyte solution and even further reducing direct current resistance at low temperature of the electrochemical device while also further improving high-temperature storage characteristics of the electrochemical device. Specifically, the proportion constituted by other solvents in the electrolyte solution when the total mass of the electrolyte solution is taken to be 100 mass% is preferably 20 mass% or less, more preferably 10 mass% or less, even more preferably 5 mass% or less, particularly preferably 1 mass% or less, and most preferably 0 mass% (below the limit of detection).

In particular, a halogenated carbonate solvent has poor affinity with the polymer A, and the presence of a halogenated carbonate solvent in the electrolyte solution leads to increased direct current resistance at low temperature of the electrochemical device. Accordingly, from a viewpoint of further reducing direct current resistance at low temperature of the electrochemical device, the proportion constituted by a halogenated carbonate solvent in the electrolyte solution when the total mass of the electrolyte solution is taken to be 100 mass% is preferably 20 mass% or less, more preferably 10 mass% or less, even more preferably 5 mass% or less, particularly preferably 1 mass% or less, and most preferably 0 mass% (below the limit of detection).

### <Supporting electrolyte>

The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆ and LiBF₄ are preferable because they readily dissolve in the ester solvent (I) and the non-halogenated carbonate solvent and exhibit a high degree of dissociation. One supporting electrolyte may be used individually, or two or more supporting electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The concentration (25°C) of the supporting electrolyte in the electrolyte solution is preferably 0.4 mol/L or more, and more preferably 0.5 mol/L or more, and is preferably 2.0 mol/L or less, and more preferably 1.5 mol/L or less. The lithium ion conductivity generally has a maximum value relative to the concentration of the supporting electrolyte, but through the concentration of the supporting electrolyte in the electrolyte solution being within any of the ranges set forth above, appropriate lithium ion conductivity is achieved, and battery characteristics of a lithium ion secondary battery are sufficiently ensured.

### <Additives>

Known additives that can be used in electrolyte solutions of electrochemical devices may be used as additives without any specific limitations, and examples thereof include vinylene carbonate (VC), fluoroethylene carbonate, and ethyl methyl sulfone. Of these additives, vinylene carbonate is preferable from a viewpoint that direct current resistance at low temperature of the electrochemical device can be even further reduced while also further improving high-temperature storage characteristics of the electrochemical device, and that normal-temperature output characteristics are enhanced.

Note that in the present disclosure, vinylene carbonate and fluoroethylene carbonate are considered to correspond to "additives" rather than corresponding to "carbonate solvents" (non-halogenated carbonate solvents and halogenated carbonate solvents).

### <Production method of electrochemical device>

The electrochemical device can be produced by, for example, stacking the positive electrode and the negative electrode with the separator in-between, performing rolling, folding, or the like of the resultant laminate, as necessary, to place the laminate in a device container, injecting the electrolyte solution into the device container, and sealing the device container. In order to prevent pressure increase inside the device and occurrence of overcharging or overdischarging, an expanded metal; an overcurrent preventing device such as a fuse or a PTC device; or a lead plate may be provided in the device container as necessary. The shape of the electrochemical device may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the weight-average molecular weight and proportion of 1,2-bonded hydrogenated butadiene units for a polymer A and the reduction of direct current resistance (-10°C), normal-temperature output characteristics (25°C), and high-temperature storage characteristics (60°C) for a lithium ion secondary battery.

### <Weight-average molecular weight>

The weight-average molecular weight of a polymer A was measured by gel permeation chromatography (GPC). Specifically, the weight-average molecular weight was calculated as a standard substance-equivalent value by using polystyrene to prepare a calibration curve for a standard substance. The measurement conditions were as follows.

### <<Measurement conditions>>

Column: TSK gel α-M × 2 columns (7.8 mm (internal diameter) × 30 cm × 2 columns; produced by Tosoh Corporation)
Eluent: Dimethylformamide (50 mM lithium bromide, 10 mM phosphoric acid)
Flow rate: 0.5 mL/min
Sample concentration: Approximately 0.5 g/L (solid content concentration)
Injection volume: 200 µL
Column temperature: 40°C
Detector: Differential refractive index detector RI (HLC-8320 GPC RI Detector produced by Tosoh Corporation)
Detector conditions: RI: Pol(+), Res (1.0 s)
Molecular weight marker: Standard Polystyrene Kit PStQuick K produced by Tosoh Corporation

### <Proportion of 1,2-bonded hydrogenated butadiene units>

A water dispersion of a polymer A was vacuum dried at 60°C for 24 hours and was then measured by ¹³C-NMR so as to determine the proportion constituted by 1,2-bonded hydrogenated butadiene units among all repeating units of the polymer A and the proportion constituted by 1,2-bonded hydrogenated butadiene units among all hydrogenated 1,3-butadiene units of the polymer A.

### <Reduction of direct current resistance (-10°C)>

A lithium ion battery was charged to an SOC (State of Charge) of 50% at 140 mA and 25°C. Thereafter, 20 seconds of discharging at 140 mA and 20 seconds of charging at 140 mA were performed at -10°C, and the voltage change upon discharge was taken to be ΔV_{0.2}. Next, the same test was performed at 350 mA, 700 mA, and 1,050 mA to determine ΔV_{0.5}, ΔV_{1.0}, and ΔV_{1.5}.

Next, the discharge current value was plotted on an X-axis and ΔV was plotted on a Y-axis, a linear approximation passing through an intercept of zero was determined, and the gradient of this linear approximation was taken to be the DCR (Direct Current Resistance) and was evaluated by the following standard.
A: DCR of less than 0.8 Ω
B: DCR of not less than 0.8 Ω and less than 1 Ω
C: DCR of not less than 1 Ω and less than 1.2 Ω
D: DCR of 1.2 Ω or more

### <Normal-temperature output characteristics (25°C)>

A lithium ion secondary battery was constant-current charged at 140 mA (0.2 CmA) until the battery voltage reached 4.2 V and subsequently constant-voltage charged at 4.2 V until the charging current reached 14 mA at 25°C. Next, the lithium ion secondary battery was constant-current discharged at 140 mA until the battery voltage reached 3.0 V. The discharge capacity at this time was taken to be C_{0.2}. Next, the capacity C_{2.0} upon 1,400 mA (2.0 CmA) discharging was determined in the same manner with the exception that discharging was performed at 1,400 mA. A capacity ratio (%) was calculated (= C_{2.0}/C_{0.2} × 100) and was evaluated by the following standard. A larger capacity ratio indicates that a lithium ion secondary battery has better normal-temperature output characteristics.
A: Capacity ratio of 85% or more
B: Capacity ratio of not less than 80% and less than 85%
C: Capacity ratio of less than 80%

### <High-temperature storage characteristics (60°C)>

A lithium ion secondary battery was constant-current charged at 140 mA (0.2 CmA) until the battery voltage reached 4.2 V and subsequently constant-voltage charged at 4.2 V until the charging current reached 14 mA at 25°C. Next, the lithium ion secondary battery was constant-current discharged at 140 mA until the battery voltage reached 3.0 V. The discharge capacity at this time was taken to be Cini. Next, the lithium ion secondary battery was charged in the same manner at 25°C and was then stored in a charged state at 60°C for 4 weeks. After this storage, the lithium ion secondary battery was restored to 25°C and was constant-current discharged at 140 mA until the battery voltage reached 3.0 V. The discharge capacity at this time was taken to be C_{4w}, and a high-temperature storage capacity ratio (%) was calculated (= C_{4w}/C_{Ini} × 100) and was evaluated by the following standard. A larger high-temperature storage capacity ratio indicates that a lithium ion secondary battery has better high-temperature storage characteristics.
A: High-temperature storage capacity ratio of 85% or more
B: High-temperature storage capacity ratio of not less than 80% and less than 85%
C: High-temperature storage capacity ratio of not less than 75% and less than 80%
D: High-temperature storage capacity ratio of less than 75%

### (Example 1)

### <Production of NMP solution of polymer A>

A reactor was charged with 180 parts of deionized water, 25 parts of sodium dodecylbenzenesulfonate aqueous solution having a concentration of 10%, 35 parts of acrylonitrile as a nitrile group-containing monomer, and 0.7 parts of t-dodecyl mercaptan as a chain transfer agent in order. Next, gas inside the reactor was purged three times with nitrogen, and then 65 parts of 1,3-butadiene as a conjugated diene monomer was added. The reactor was maintained at 10°C while 0.1 parts of cumene hydroperoxide as a polymerization initiator, a reductant, and an appropriate amount of a chelating agent were added, and a polymerization reaction was continued under stirring. At the point at which the polymerization conversion rate reached 80%, 0.1 parts of hydroquinone aqueous solution (concentration: 10%) was added as a polymerization inhibitor to stop the polymerization reaction. Next, residual monomer was removed at a water temperature of 80°C to yield a water dispersion of a precursor (particulate polymer) of a polymer A.

The obtained water dispersion of the precursor and a palladium catalyst (solution obtained by mixing 1% palladium acetate acetone solution with an equal weight of deionized water) were loaded into an autoclave such that the palladium content was 5,000 ppm relative to the weight of solid content contained in the water dispersion. A hydrogenation reaction was performed at a hydrogen pressure of 3 MPa and a temperature of 50°C for 6 hours to yield a water dispersion of a polymer A including a nitrile group-containing monomer unit and an alkylene structural unit. The weight-average molecular weight and proportion of 1,2-bonded hydrogenated butadiene units were measured for this polymer A. The results are shown in Table 1.

The water dispersion of the polymer was mixed with an appropriate amount of NMP as an organic solvent. Next, water contained in the resultant mixture was completely evaporated under reduced pressure to yield an NMP solution (solid content concentration: 8%) of the polymer.

### <Production of positive electrode>

A mixing vessel was charged with 3 parts of multi-walled carbon nanotubes (BET specific surface area: 230 m²/g) as a conductive material, 7.5 parts of the NMP solution of the polymer A (0.6 parts in terms of the polymer A), and 89.5 parts of NMP as an organic solvent, and stirring thereof was performed using a disper blade (3,000 rpm, 10 minutes). The resultant mixture was subjected to 1 hour of dispersing at a circumferential speed of 8 m/s using a bead mill in which zirconia beads of 1 mm in diameter were used so as to produce a conductive material dispersion liquid (solid content concentration: 3.6%).

Next, 97.42 parts of a ternary active material having a layered structure (LiNi_{0.8}Co_{0.1}Mn_{0.1}O₂; average particle diameter: 10 µm) as a positive electrode active material, 30 parts of the conductive material dispersion liquid (solid content concentration: 3.6%), 18.75 parts of an NMP solution (solid content concentration: 8.0%) of PVdF as another binder for a positive electrode, and NMP were loaded into a vessel and were mixed by a planetary mixer (60 rpm, 30 minutes) to produce a slurry composition for a positive electrode. Note that the additive amount of NMP was adjusted such that the viscosity of the obtained slurry composition for a positive electrode was within a range of 3,500 mPa·s to 4,500 mPa·s. The viscosity of the slurry composition for a positive electrode was measured in accordance with JIS Z8803: 1991 using a single-cylinder rotational viscometer. The measurement temperature was 25°C, and the rotation speed during measurement was 60 rpm.

The obtained slurry composition for a positive electrode was applied onto aluminum foil (thickness: 20 µm) serving as a current collector by a comma coater such as to have a coating weight after drying of 21 mg/cm², was dried at 120°C for 20 minutes and at 130°C for 20 minutes, and was subsequently heat treated at 60°C for 10 hours to obtain a positive electrode web. This positive electrode web was rolled by roll pressing to produce a sheet-shaped positive electrode including the aluminum foil and a positive electrode mixed material layer of 3.4 g/cm³ in density. The thickness of the sheet-shaped positive electrode was 61 µm. This sheet-shaped positive electrode was cut to 4.8 cm in width and 50 cm in length to obtain a positive electrode for a lithium ion secondary battery (single-sided positive electrode).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer) for a negative electrode. The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

Next, copper foil of 15 µm in thickness was prepared as a current collector. The slurry composition for a negative electrode was applied onto both sides of the copper foil such as to have a coating weight after drying of 10 mg/cm² at each side and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm³ in density. This sheet-shaped negative electrode was cut to 5.0 cm in width and 52 cm in length to obtain a negative electrode for a lithium ion secondary battery (double-sided negative electrode).

### <Production of electrolyte solution>

An electrolyte solution was obtained by mixing 53 parts of ethyl propanoate as an ester solvent (I), 45 parts of ethylene carbonate as a non-halogenated carbonate solvent, and 2 parts of vinylene carbonate as an additive and then dissolving LiPF₆ as a supporting electrolyte in the obtained mixed solvent such as to have a concentration of 1.0 mol/L.

### <Production of lithium ion secondary battery>

A laminate was produced by placing a separator (microporous membrane made of polyethylene) of 15 µm in thickness between a positive electrode for a lithium ion secondary battery (single-sided positive electrode) and a negative electrode for a lithium ion secondary battery (double-sided negative electrode) such that the respective electrode mixed material layers thereof faced each other. Specifically, the laminate had a "single-sided positive electrode/separator/double-sided negative electrode/separator/single-sided positive electrode" structure. The laminate was wound up using a core of 20 mm in diameter to obtain a roll. The obtained roll was compressed to a thickness of 4.5 mm from one direction at a rate of 10 mm/s. Note that the compressed roll had an elliptical shape in plan view, and the ratio of the major axis and the minor axis (major axis/minor axis) was 7.7.

The compressed roll was subsequently housed inside a laminate case made of aluminum together with 3.2 g of the electrolyte solution described above. After connecting a nickel lead at a specific location on the negative electrode and connecting an aluminum lead at a specific location on the positive electrode, an opening of the case was thermally sealed to obtain a lithium ion secondary battery. This lithium ion secondary battery had a pouch shape of a specific size capable of housing the aforementioned roll, and the nominal capacity of the battery was 700 mAh.

Reduction of direct current resistance (-10°C), normal-temperature output characteristics (25°C), and high-temperature storage characteristics (60°C) were evaluated for the obtained lithium ion secondary battery. The results are shown in Table 1.

### (Examples 2 to 5)

An NMP solution of a polymer A, a positive electrode, a negative electrode, an electrolyte solution, and a lithium ion secondary battery were produced and various evaluations were performed in the same way as in Example 1 with the exception that the amounts of ethyl propanoate and ethylene carbonate were changed as indicated below in production of the electrolyte solution. The results are shown in Table 1.
Example 2: Ethyl propanoate 38 parts, ethylene carbonate 60 parts
Example 3: Ethyl propanoate 63 parts, ethylene carbonate 35 parts
Example 4: Ethyl propanoate 73 parts, ethylene carbonate 25 parts
Example 5: Ethyl propanoate 78 parts, ethylene carbonate 20 parts

### (Examples 6 to 9)

An NMP solution of a polymer A, a positive electrode, a negative electrode, an electrolyte solution, and a lithium ion secondary battery were produced and various evaluations were performed in the same way as in Example 1 with the exception that ethyl pentanoate (Example 6), ethyl hexanoate (Example 7), butyl propanoate (Example 8), or hexyl propanoate (Example 9) was used instead of ethyl propanoate in production of the electrolyte solution. The results are shown in Tables 1 and 2.

### (Examples 10 and 11)

An NMP solution of a polymer A, a positive electrode, a negative electrode, an electrolyte solution, and a lithium ion secondary battery were produced and various evaluations were performed in the same way as in Example 1 with the exception that the amount of t-dodecyl mercaptan as a chain transfer agent was changed to 0.5 parts (Example 10) or 0.25 parts (Example 11) in production of the NMP solution of the polymer A. The results are shown in Table 2.

### (Example 12)

An NMP solution of a polymer A, a positive electrode, a negative electrode, an electrolyte solution, and a lithium ion secondary battery were produced and various evaluations were performed in the same way as in Example 1 with the exception that 0.2 parts of potassium persulfate was used instead of 0.1 parts of cumene hydroperoxide as a polymerization initiator and the polymerization reaction temperature was changed from 50°C to 30°C in production of the NMP solution of the polymer A. The results are shown in Table 2.

### (Example 13)

An NMP solution of a polymer A, a positive electrode, a negative electrode, an electrolyte solution, and a lithium ion secondary battery were produced and various evaluations were performed in the same way as in Example 1 with the exception that hydroquinone aqueous solution (concentration: 10%) as a reaction inhibitor was added at the point at which the polymerization conversion rate reached 95% rather than at the point at which the polymerization conversion rate reached 80% in production of the NMP solution of the polymer A. The results are shown in Table 2.

### (Comparative Examples 1 and 2)

An NMP solution of a polymer A, a positive electrode, a negative electrode, an electrolyte solution, and a lithium ion secondary battery were produced and various evaluations were performed in the same way as in Example 1 with the exception that ethyl acetate (R¹: methyl group; R²: ethyl group; Comparative Example 1) or methyl propanoate (R¹: ethyl group; R²: methyl group; Comparative Example 2) was used instead of ethyl propanoate in production of the electrolyte solution. The results are shown in Table 2.

### (Comparative Example 3)

A positive electrode, a negative electrode, an electrolyte solution, and a lithium ion secondary battery were produced and various evaluations were performed in the same way as in Example 1 with the exception that the polymer A was not produced and that polyvinylpyrrolidone was used instead of the polymer A in production of the positive electrode. The results are shown in Table 2.

In Tables 1 and 2:
"AN/Total [mass%]" indicates proportion constituted by acrylonitrile units among all repeating units (100 mass%) in polymer A;
"BD/Total [mass%]" indicates proportion constituted by 1,3-butadiene-derived repeating units among all repeating units (100 mass%) in polymer A;
"1,2 H-BD/Total[mass%]" indicates proportion constituted by 1,2-bonded hydrogenated butadiene units among all repeating units (100 mass%) in polymer A; and
"1,2 H-BD/H-BD [mass%]" indicates proportion constituted by 1,2-bonded hydrogenated butadiene units among all hydrogenated 1,3-butadiene units (100 mass%) in polymer A.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| Electrolyte solution | Ester solvent | | Type | Ethyl propanoate | Ethyl propanoate | Ethyl propanoate | Ethyl propanoate | Ethyl propanoate | Ethyl pentanoate | Ethyl hexanoate | Butyl propanoate |
| | | | R¹ | Ethyl | Ethyl | Ethyl | Ethyl | Ethyl | n-Butyl | n-Pentyl | Ethyl |
| | | | R² | Ethyl | Ethyl | Ethyl | Ethyl | Ethyl | Ethyl | Ethyl | n-Butyl |
| | | | Amount [parts by mass] | 53 | 38 | 63 | 73 | 78 | 53 | 53 | 53 |
| | Non-halogenated carbonate solvent | | Type | EC | EC | EC | EC | EC | EC | EC | EC |
| | | | Amount [parts by mass] | 45 | 60 | 35 | 25 | 20 | 45 | 45 | 45 |
| | Ester solvent/Non-halogenated carbonate solvent [-] | | | 1.2 | 0.6 | 1.8 | 2.9 | 3.9 | 1.2 | 1.2 | 1.2 |
| | Additive | | Type | VC | VC | VC | VC | VC | VC | VC | VC |
| | | | Amount [parts by mass] | 2 | 2 | 2 | 2 | 2 | 2 | 2 | 2 |
| Positive electrode | Binder for positive electrode | Polymer A | AN/Total [mass%] | 35 | 35 | 35 | 35 | 35 | 35 | 35 | 35 |
| | | | BD/Total [mass%] | 65 | 65 | 65 | 65 | 65 | 65 | 65 | 65 |
| | | | 1,2 H-BD/Total [mass%] | 5.9 | 5.9 | 5.9 | 5.9 | 5.9 | 5.9 | 5.9 | 5.9 |
| | | | 1,2 H-BD/H-BD [mass%] | 9.1 | 9.1 | 9.1 | 9.1 | 9.1 | 9.1 | 9.1 | 9.1 |
| | | | Mw [g/mol] | 150,000 | 150,000 | 150,000 | 150,000 | 150,000 | 150,000 | 150,000 | 150,000 |
| | | Other | | PVdF | PVDF | PVdF | PVdF | PVdF | PVdF | PVDF | PVdF |
| | Conductive material | Type | | CNT | CNT | CNT | CNT | CNT | CNT | CNT | CNT |
| | | Specific surface area [m²/g] | | 230 | 230 | 230 | 230 | 230 | 230 | 230 | 230 |
| Normal-temperature output characteristics (25°C) | | | | A | A | A | B | C | A | A | A |
| Reduction of direct current resistance (-10°C) | | | | A | A | A | B | C | B | C | B |
| High-temperature storage characteristics (60°C) | | | | A | A | A | B | C | B | C | B |

**[Table 2]**

| | | | | Example 9 | Example 10 | Example 11 | Example 12 | Example 13 | Comparative Example 1 | Comparative Example 2 | Comparative Example 3 |
|---|---|---|---|---|---|---|---|---|---|---|---|
| Electrolyte solution | Ester solvent | | Type | Hexyl propanoate | Ethyl propanoate | Ethyl propanoate | Ethyl propanoate | Ethyl propanoate | Ethyl acetate | Methyl propanoate | Ethyl propanoate |
| | | | R¹ | Ethyl | Ethyl | Ethyl | Ethyl | Ethyl | Methyl | Ethyl | Ethyl |
| | | | R² | n-Hexyl | Ethyl | Ethyl | Ethyl | Ethyl | Ethyl | Methyl | Ethyl |
| | | | Amount [parts by mass] | 53 | 53 | 53 | 53 | 53 | 53 | 53 | 53 |
| | Non-halogenated carbonate solvent | | Type | EC | EC | EC | EC | EC | EC | EC | EC |
| | | | Amount [parts by mass] | 45 | 45 | 45 | 45 | 45 | 45 | 45 | 45 |
| | Ester solvent/Non-halogenated carbonate solvent [-] | | | 1.2 | 1.2 | 1.2 | 1.2 | 1.2 | 1.2 | 1.2 | 1.2 |
| | Additive | | Type | VC | VC | VC | VC | VC | VC | VC | VC |
| | | | Amount [parts by mass] | 2 | 2 | 2 | 2 | 2 | 2 | 2 | 2 |
| Positive electrode | Binder for positive electrode | Polymer A | AN/Total [mass%] | 35 | 35 | 35 | 35 | 35 | 35 | 35 | - |
| | | | BD/Total [mass%] | 65 | 65 | 65 | 65 | 65 | 65 | 65 | |
| | | | 1,2 H-BD/Total [mass%] | 5.9 | 5.8 | 6 | 11.7 | 15.6 | 5.9 | 5.9 | |
| | | | 1,2 H-BD/H-BD [mass%] | 9.1 | 8.9 | 9.3 | 18 | 24 | 9.1 | 9.1 | |
| | | | Mw [g/mol] | 150,000 | 240,000 | 400,000 | 150,000 | 150,000 | 150,000 | 150,000 | |
| | | Other | | PVDF | PVdF | PVDF | PVdF | PVdF | PVDF | PVDF | PVdF PVP |
| | Conductive material | Type | | CNT | CNT | CNT | CNT | CNT | CNT | CNT | CNT |
| | | Specific surface area [m²/g] | | 230 | 230 | 230 | 230 | 230 | 230 | 230 | 230 |
| Normal-temperature output characteristics (25°C) | | | | A | B | C | A | A | A | A | C |
| Reduction of direct current resistance (-10°C) | | | | C | A | A | B | C | D | D | D |
| High-temperature storage characteristics (60°C) | | | | C | A | A | A | A | A | A | D |

It can be seen from Tables 1 and 2 that direct current resistance at low temperature of an electrochemical device can be reduced while also improving high-temperature storage characteristics of the electrochemical device in Examples 1 to 13 in which a polymer A is used as a binder for a positive electrode and in which a mixed solvent of an ester solvent (I) and a non-halogenated carbonate solvent is used as a constituent solvent of an electrolyte solution. It can also be seen that an electrochemical device has excellent normal-temperature output characteristics in Examples 1 to 13.

In contrast, it can be seen from Table 2 that direct current resistance at low temperature of an electrochemical device cannot be sufficiently reduced in Comparative Examples 1 and 2 in which an ester solvent (I) is not used, but an ester solvent not corresponding to an ester solvent (I) is used as a constituent solvent of an electrolyte solution. It can also be seen that direct current resistance at low temperature of an electrochemical device cannot be reduced and that high-temperature storage characteristics and normal-temperature output characteristics deteriorate in Comparative Example 3 in which PVP is used instead of a polymer A as a binder for a positive electrode.

### INDUSTRIAL APPLICABILITY

The presently disclosed electrochemical device has reduced direct current resistance at low temperature and excellent high-temperature storage characteristics.

## Claims

1. A non-aqueous electrochemical device comprising a positive electrode, a negative electrode, a separator, and an electrolyte solution, wherein
the positive electrode includes a positive electrode mixed material layer containing a positive electrode active material, a conductive material, and a binder for a positive electrode,
the binder for a positive electrode includes a polymer A that includes a nitrile group-containing monomer unit and an alkylene structural unit, and
the electrolyte solution contains a non-halogenated carbonate solvent and an ester solvent indicated by formula (I), shown below,
R¹-C(=O)-O-R² ... (I)
where, in formula (I), R¹ and R² each represent, independently of each other, a chain alkyl group having a carbon number of 2 or more.

2. The non-aqueous electrochemical device according to claim 1, wherein a mass ratio of the ester solvent relative to the non-halogenated carbonate solvent is not less than 0.5 and not more than 3.

3. The non-aqueous electrochemical device according to claim 1 or 2, wherein a proportion constituted by the non-halogenated carbonate solvent in the electrolyte solution is 15 mass% or more when total mass of the electrolyte solution is taken to be 100 mass%.

4. The non-aqueous electrochemical device according to any one of claims 1 to 3, wherein the conductive material includes a fibrous carbon material.

5. The non-aqueous electrochemical device according to claim 4, wherein the fibrous carbon material has a specific surface area of 150 m²/g or more.

6. The non-aqueous electrochemical device according to any one of claims 1 to 5, wherein proportional content of the nitrile group-containing monomer unit in the polymer A is not less than 20 mass% and not more than 50 mass% when all repeating units in the polymer A are taken to be 100 mass%, and proportional content of the alkylene structural unit in the polymer A is not less than 40 mass% and not more than 80 mass% when all repeating units in the polymer A are taken to be 100 mass%.

7. The non-aqueous electrochemical device according to any one of claims 1 to 6, wherein the polymer A has a weight-average molecular weight of not less than 5,000 g/mol and not more than 500,000 g/mol.

8. The non-aqueous electrochemical device according to any one of claims 1 to 7, wherein proportional content of a 1,2-bonded hydrogenated butadiene unit in the polymer A is 20 mass% or less when all repeating units in the polymer A are taken to be 100 mass%.

9. The non-aqueous electrochemical device according to any one of claims 1 to 8, wherein the binder for a positive electrode further includes a fluorine-containing resin.
